# NEW EUROPEAN PATENT SPECIFICATION

(11) **EP 0 595 409 B2**
(45) Date of publication and mention of the opposition decision: **10.11.2004**
(45) Mention of the grant of the patent: 20.05.1998
(21) Application number: 93202948.1
(22) Date of filing: 21.10.1993
(51) Int. Cl.: A01J 7/00

(54) **A construction for milking cows**
Konstruktion zum Melken von Kühen
Dispositif de traite de vaches

(30) Priority: 29.10.1992 NL 9201877
(43) Date of publication of application: 04.05.1994
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 360 354
- EP-A- 0 519 544
- SU-A- 1 713 509
- US-A- 4 726 322
- DATABASE WPI Week 9202, Derwent Publications Ltd., London, GB; AN 92-015480 & SU-A-1 644 831 (LIVERMORE H F CORP)
- DATABASE WPI Week 199302, Derwent Publications Ltd., London, GB; AN 1993-016196 & SU 1 713 509 A ((GOME-R) GOMEL SEISMIC EQUIP DES BUR) 23 February 1992
- English translation of SU-A-1713509
- Deutsche tierärztliche Wochenschrift vol. 83 (2): p.64-65; 1976; W. Förster' "Eine Methode zur indirekten Blutdruckbestimmung bei Kalb und Rind mit Hilfe des Ultraschall-Doppler-Effekts."

## Description

The present invention relates to a construction for milking cows according to the preamble of claim 1.

More in particular when such a construction is implemented as a fully automated and robotized milking installation, in which teat cups are automatically connected to the teats and milking is effected automatically, it is important that means for checking whether the milk is obtained from a cow being ill or from a healthy cow, will be available.

Although SU-A-1644831 describes the presence of a heart beat rate sensor in a construction for milking cows, this sensor is applied to obtain a synchronisation of the frequency of the pulses of the pulsator in the milking construction with the heart beat rhythm of the cows.

Therefore, according to the invention the construction is characterized in that it includes a milking robot having a robot head which acts as a carrier for one or more teat cups, the sensor being spring-loaded disposed on this robot head. In a specific embodiment, the sensor can then be positioned, relative to the teat cups, behind a laser unit present on the robot head for determining the position of the cow's teats. When the robot head has then been moved to under the cow's udder and the teat cups have been connected to the teats of the cow's udder, the robot head can be kept under the cow in such a manner that the sensor can be moved against the underside, more specifically the abdomen, of the cow.

For a better understanding of the invention and to show how the same may be carried into effect, reference will now be made, by way of example, to the accompanying drawings, in which:
Figure 1 is a plan view of a construction for milking cows in accordance with the invention, and
Figure 2 is a partial side view of this construction.

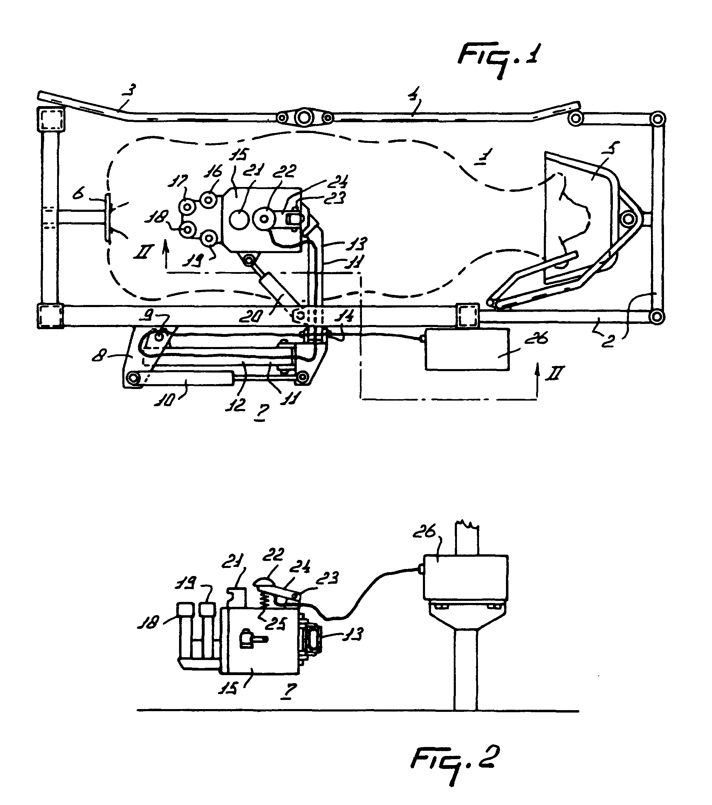

The construction shown in Figure 1 for milking cows shows a milking parlour 1 which is surrounded by a rail system 2, one longitudinal side of which is provided with a door 3 through which the cow can enter the milking parlour and a door 4 through which the cow can leave same. At its leading side, the milking parlour is provided in known per se manner with a feeding trough, in order that the cow present in the milking parlour can be supplied, preferably automatically, during milking with an appropriate quantity of fodder. Known per se means 6 for keeping the cow in the longitudinal direction in a more or less predetermined position during milking are shown schematically in Figure 1. At the longitudinal side of the milking parlour 1 opposite the one in which the doors 3 and 4 are located, there is arranged a milking robot 7. This milking robot may be of the type as, for example, described in the European patent application 0 360 354 or 0 519 544. Shown schematically, the milking robot includes a portion 8 which moves in the longitudinal direction of the milking parlour and a robot arm 11 which by means of an operating cylinder 10 is pivotal relative to this portion 8 about a shaft 9, which robot arm comprises two portions, a first portion 12 being directly coupled to the portion 8 that moves in the longitudinal direction and a second portion 13 being at a square angle to the robot arm portion 12 and being movable relative to the portion 12 about a predominantly horizontal shaft 14. The motional feature mentioned last is provided to enable the robot arm portion 13 to yield when the cow hits the robot arm with its legs and would thus damage it. The milking robot additionally includes a robot head 15, which acts as a carrier for the teat cups 16 - 19 and can be pivoted with the aid of an operating cylinder 20 relative to the end of the portion 13 of the robot arm. The robot head 15 further includes a laser unit 21 for determining the position of the teats of the cow's udder. The teat cups 16 - 19 are disposed in a slightly V-shaped position at the end of the robot head 15, while the laser unit is placed in front of the space present between the teat cups. In a position which relative to the teat cups 16 - 19 is behind the laser unit 21 there is arranged a sensor 22, more specifically on a holder 24 which is pivotal about a horizontal pin 23, while furthermore a spring 25 is present for keeping the sensor 22 without counter-pressure in an upwardly pushed position. The sensor 22 is of such a design that with the aid thereof predetermined properties of the cow can be recorded, such as, for example, the flow rate of the blood and/or the heart beat and/or the blood pressure. In the present embodiment, the sensor is designed as an ultrasonic sensor which, when pushed in the correct position against the cow, is capable of recording sounds in the body, and more specifically particular sounds in the relevant blood vessels. The sensor 22 co-operates with a computer 26 which, in Figure 1, is positioned at the side of the milking parlour. By means of the measuring equipment constituted by the sensor 22 and the computer 26 quantities such as the blood flow rate, the heart beat or the blood pressure can be measured, whilst with the aid of the computer data can be derived from the measured quantities about the health condition of a cow. The quantities measured as well as the data derived therefrom can be displayed on a display screen which is not shown in the drawings but constitutes part of the computer. When for the benefit of the milking operation the robot arm is automatically pivoted to under the cow to a position under the cow's udder obtained, for example, with the aid of a cow identification system and subsequent thereto the position of the teats has accurately been determined by means of the laser unit, the teat cups 16 - 19 can be connected to the cow's feats. The robot head is then adjusted to such a height that by means of a horizontally emitted laser beam the laser unit can determine the position of the teats, at which height level the spring-loaded sensor 22 pushes against the abdominal region of the cow. After the teat cups 16 - 19 have been moved upwardly and have been connected to the teats, the robot head can be maintained in the same position under the cow, so that the spring-loaded sensor continues to be pushed against the abdominal region of the cow, and more specifically for such a long period of time as is required or desired for collecting the desired data. The sensor 22 is disposed on the robot head 15, as then the sensor can be brought into contact with the cow in a suitable location.

## Claims

1. A construction for milking cows, comprising a sensor (22) for measuring relevant values in respect of the blood of the cow, such as the heart beat, **characterized in that** the construction includes a milking robot (7) having a robot head (15) which functions as a carrier for one or more teat cups (16 - 19), the sensor (22) being spring-loaded disposed on this robot head (15).

2. A construction as claimed in claim 1, **characterized in that** the sensor (22) is positioned, relative to the teat cups (16 - 19), behind a laser unit (21) present on the robot head (15) for determining the position of the teats on the cow's udder.

3. A construction as claimed in claim 1 or 2, **characterized in that**, when the robot head (15) has been moved to under the cow's udder and the teat cups (16 - 19) have been connected to the teats of the cow's udder, the robot head (15) is kept under the cow in such a position that the sensor (22) is pushed against the underside, more specifically against the abdomen, of the cow.

## Patentansprüche

1. Vorrichtung zum Melken von Kühen mit einem Sensor (22) zum Messen relevanter Werte bezüglich des Blutes der Kuh, wie z. B. des Pulses,
**gekennzeichnet durch** einen Melkroboter (7) mit einem Roboterkopf (15), der als Träger für einen oder mehrere Zitzenbecher (16-19) dient, wobei der Sensor (22) federbelastet auf diesem Roboterkopf (15) angeordnet ist.

2. Vorrichtung nach Anspruch 1,
**dadurch gekennzeichnet, daß** der Sensor (22) relativ zu den Zitzenbechern (16-19) hinter einem auf dem Roboterkopf (15) angebrachten Laser (21) angeordnet ist, um die Lage der Zitzen an dem Kuheuter zu bestimmen.

3. Vorrichtung nach Anspruch 1 oder 2,
**dadurch gekennzeichnet, daß** der Roboterkopf (15), nachdem er unter das Kuheuter bewegt und die Zitzenbecher (16-19) an die Zitzen des Kuheuters angeschlossen worden sind, in einer solchen Position unterhalb der Kuh gehalten wird, daß der Sensor (22) gegen die Unterseite, insbesondere gegen den Bauch der Kuh gedrückt ist.

## Revendications

1. Dispositif de traite de vaches, comprenant un capteur (22) pour mesurer des valeurs caractéristiques concernant le sang de la vache, telles que le rythme cardiaque,
**caractérisé en ce que** le dispositif comporte un robot trayeur (7) ayant une tête de robot ( 15) qui sert de support pour un ou plusieurs godets de trayons (16 - 19) le capteur (22) étant sollicite par un ressort et disposé sur cette tête de robot (15).

2. Dispositif selon la revendication 1, **caractérisé en ce que** le capteur (22) est positionné, par rapport aux godets de trayons (16 - 19), derrière une unité laser (21) présente sur la tête de robot (15) pour déterminer la position des trayons sur le pis de la vache.

3. Dispositif selon la revendication 1 ou 2, **caractérisé en ce que**, quand la tête de robot (15) a été amenée jusque sous le pis de la vache et quand les godets de trayons (16 - 19) ont été reliés aux trayons du pis de la vache, la tête de robot (15) est maintenue sous la vache en une position telle que le capteur (22) est poussé contre le dessous de la vache, plus spécifiquement contre l'abdomen de la vache.
